**Europäisches Patentamt**

**European Patent Office**

**Office européen des brevets**

(19)

(11) Veröffentlichungsnummer: **0 054 818**
**B1**

(12) # EUROPÄISCHE PATENTSCHRIFT

(45) Veröffentlichungstag der Patentschrift:
**30.05.84**

(51) Int. Cl.³: **H 01 F 1/08**, G 11 B 5/62

(21) Anmeldenummer: **81110205.2**

(22) Anmeldetag: **07.12.81**

(54) Agglomerierte ferromagnetische Eisenteilchen.

(30) Priorität: **19.12.80 DE 3048086**

(43) Veröffentlichungstag der Anmeldung:
**30.06.82 Patentblatt 82/26**

(45) Bekanntmachung des Hinweises auf die Patenterteilung:
**30.05.84 Patentblatt 84/22**

(84) Benannte Vertragsstaaten:
**BE DE FR GB IT NL**

(56) Entgegenhaltungen:
**DE - A - 2 743 298**

(73) Patentinhaber: **BAYER AG, Konzernverwaltung RP
Patentabteilung, D-5090 Leverkusen 1 Bayerwerk (DE)**

(72) Erfinder: **Rademachers, Jakob, Dr.,
Hoeninghausstrasse 34, D-4150 Krefeld 12 (DE)**
Erfinder: **Naumann, Rolf, Dr., Buschstrasse 165,
D-4150 Krefeld (DE)**
Erfinder: **Biermann, Hans-Peter, Dr., Bethelstrasse 52,
D-4150 Krefeld (DE)**
Erfinder: **Buxbaum, Gunter, Dr., Holzapfelweg 2,
D-4150 Krefeld (DE)**
Erfinder: **Rambold, Wolfgang, Dr., Bethelstrasse 12,
D-4150 Krefeld (DE)**

## Beschreibung

Die vorliegende Erfindung betrifft kugelförmige Agglomerate im wesentlichen aus Eisen bestehender Primärteilchen, ein Verfahren zur Herstellung dieser Agglomerate sowie die Verwendung derselben zur Fertigung magnetischer Aufzeichnungsmedien.

Der ständig wachsende Bedarf nach qualitativ immer hochwertigeren Materialien für die Magnetaufzeichnung hat in den letzten Jahren zur Entwicklung magnetischer Metall- und Legierungspigmente, vornehmlich auf Basis von Eisen, Kobalt und/oder Nickel, geführt. Diese zeichnen sich gegenüber den konventionellen Eisenoxid- und Chromdioxidpigmenten durch erheblich grössere Energieprodukte aus und erlauben die Herstellung von Magnetogrammträgern überlegener Speicherdichte bei gleichzeitiger Verringerung der Einsatzmenge magnetisch wirksamen Materials.

Diese Metallpigmente werden in erster Linie durch vorsichtige Reduktion von nadelförmigen Vorläuferverbindungen wie z.B. den Oxiden oder Hydroxiden von Metallen bei relativ niedrigen Temperaturen hergestellt.

Aufgrund ihrer Feinteiligkeit sind diese Metallpigmente oxidationsempfindlich und pyrophor. Für die weitere Verarbeitung, z.B. zur Herstellung von Magnetbändern, müssen die Metallteilchen stabilisiert werden. Dies geschieht sowohl durch eine kontrollierte Oxidation als auch durch eine Nachbehandlung der Metallpulver in flüssiger Phase.

Hierdurch wird nach Abtrennen der Flüssigkeit ein schützender Überzug an der Oberfläche der metallischen Eisenteilchen erzeugt, der diese vor weiterer Oxidation schützt. Die Behandlung wird sowohl in wässriger Phase als auch in organischen Lösungsmitteln oder in Gemischen der beiden durchgeführt.

Als schützende Überzugsmaterialien werden bevorzugt solche eingesetzt, die auf der Metalloberfläche eine polymere Schicht zu bilden vermögen. Angewandt worden sind beispielsweise Acrylate, Alkylenoxide, anorganische oder organische Siliciumverbindungen.

Die Behandlung in flüssiger Phase erfolgt vorzugsweise nach intensivem Dispergieren, um möglichst gebildete Sekundäragglomerate zu zerstören und die schützende Hülle an jedes Einzelkorn heranzutragen. Das Abtrennen der nachbehandelten Eisenteilchen geschieht normalerweise durch Verdampfen der flüssigen Phase.

Gemäss der japanischen Offenlegungsschrift 54/121 206 gelingt die Abtrennung der Flüssigkeit von den metallischen Eisenteilchen unter Beibehaltung der guten magnetischen Eigenschaften nur unter Schwierigkeiten. Die meisten der bisher bekanntgewordenen Verfahren sind ausserdem nicht zufriedenstellend, weil sie entweder zur Unterstützung der Wasser-Verdampfung den Zusatz von Lösungsmitteln, z.B. Aceton bedürfen oder zu grosse Risiken bezüglich der Selbstentzündung an Luft darstellen. Nach anderen Verfahren wird die Abtrennung in Apparaten mit bewegten Einbauten durchgeführt, die zu einem pulverförmigen Material führen.

Erfolgt die Trocknung der Eisenteilchen in ruhender Schicht nach vorhergehender Filtration, erhält man grosse Zusammenbackungen, die auf eine einheitliche Korngrösse z.B. zwischen 1 und 10 mm zerkleinert werden müssen. Abgesehen davon, dass hierbei eine beachtliche Menge Staub anfällt, werden durch das Zerkleinern wieder freie ungeschützte Oberflächen geschaffen, die den Stabilisierungsgrad stark beeinflussen.

Eine weitere bekannte Methode besteht in der Sprühtrocknung der stabilisierten Suspension. Hierbei werden zwar gut fliessende, aber sehr feinteilige kugelförmige Agglomerate erhalten, die einen Durchmesser von weit unter 1 mm aufweisen und noch zum Stauben neigen. Ihr Schüttgewicht ist mit 0,2 bis 0,5 kg/l sehr niedrig.

Für eine vorteilhafte Handhabung und Weiterverarbeitung ist es jedoch wünschenswert, stabilisierte Metallteilchen zu erhalten, die in einheitlicher Korngrösse freifliessend und nichtstaubend anfallen. Sie sollen zudem eine hohe Schüttdichte aufweisen und dennoch für den Bandhersteller gut dispergierbar sein.

Die Aufgabe der vorliegenden Erfindung ist es, ein Material zu liefern, welches die beschriebenen Nachteile nicht aufweist. Dieses Material soll feinteilige Metallteilchen in stabilisierter Form enthalten, nichtstaubend und freifliessend sein bei einem hohem Schüttgewicht. Ferner soll dieses Material gut dispergierbar sein zur Einarbeitung in Magnetbänder.

Ein Material, welches alle diese Forderungen in hervorragender Weise erfüllt, sind kugelförmige Agglomerate aus oberflächlich stabilisierten, im wesentlichen aus Eisen bestehenden Primärteilchen einer BET-Oberfläche von 5 bis 50 m²/g, gemessen am Agglomerat, in nichtpyrophorer Form mit einem Schüttgewicht von 0,5 bis 2,0 kg/l, vorzugsweise 0,8 bis 1,5 kg/l und einem Agglomerat-Durchmesser von 0,5 bis 10 mm, vorzugsweise 1 bis 5 mm.

Besonders unempfindlich gegen eine Oxidation sind die kugelförmigen Agglomerate, wenn die Primärteilchen durch eine Beschichtung aus Polymeren und/oder Hydrolysaten und/oder Kondensaten anorganischer und/oder organischer Verbindungen in Mengen von 0,2 bis 30 Gew.-%, vorzugsweise von 1 bis 20 Gew.-%, und besonders bevorzugt von 2–15 Gew.-% passiviert sind. Dabei kann die Beschichtung zusätzlich einen oder mehrere Korrosionsinhibitoren enthalten, welche Verbindungen aus der Reihe der Benzotriazole, der Benzothiazole, der Benzimidazole, der Guanidine, der Amidine, der Phosphate, der Phosphonate und/oder der Metallsalze von Carbonsäuren sind und in einer Menge von 0,01 bis 5 Gew.-%, vorzugsweise von 0,1 bis 4 Gew.-% und besonders bevorzugt von 0,5 bis 3 Gew.-%, bezogen auf Metall, vorliegen.

Die beanspruchten kugelförmigen Agglomerate können dadurch erhalten werden, dass nadelförmige, im wesentlichen aus Eisenoxiden bestehende Teilchen in trockener Phase reduziert, in flüssiger Phase intensiv dispergiert, mit einer anorganischen und/oder organischen Beschichtung, die Korrosionsinhibitoren enthalten kann, versehen werden und von der flüssigen Phase durch Verdampfen der flüchtigen Bestandteile unter ständig rotierender und gleichzeitig taumelnder Bewegung abgetrennt werden.

Besonders vorteilhaft verläuft der Verdampfungsvorgang bei einem Druck von 25 bis 150 mbar. Durch diese Art der Eindampfung tritt keine Beeinträchtigung der magnetischen Eigenschaften der Eisenteilchen auf. Durch die taumelnde Abrollbewegung bilden sich bei der Eindampfung kugelige Agglomerate in der angegebenen Korngrösse und Schüttdichte. Überraschenderweise führen sie nicht zu Verklebungen untereinander oder an der Trocknerwandung. Der Anteil an nicht agglomeriertem Material unterhalb 1 mm Teilchendurchmesser ist mit etwa 5 Gew.-% relativ gering. Dieses Feinmaterial kann ausgesiebt und in den Nassprozess wieder zurückgeführt werden. Der Anteil über 10 mm liegt auch in der Grössenordnung von 5 Gew.-% und wird ebenfalls zurückgeführt.

Die Korngrösse der kugelförmigen Agglomerate kann zu grösseren Teilchen neben den bekannten Massnahmen wie z.B. durch Veränderung der Drehzahl des Trockners besonders dadurch gesteuert werden, dass die Chargierung des Trockners in zwei oder mehreren Abschnitten erfolgt. Durch Aufgabe frischer Suspension auf bereits beim Trocknen gebildete Agglomerate tritt ein weiteres Kornwachstum ein. Ausserdem ist der Trockner bei dieser Verfahrensweise besser ausgelastet.

Vorzugsweise werden gut dispergierte, homogene Suspensionen mit Feststoffgehalten von 15 bis 30 Gew.-% eingesetzt. Die Dispergierung kann in Perlmühlen, Rührbehältern mit schnelllaufenden Mischwerkzeugen oder in Dispergiermaschinen erfolgen. Durch Zusatz von Verbindungen der Phosphorsäure wie z.B. Polyphosphate oder Abkömmlinge von Phosphonsäuren z.B. Salze oder Ester der 2-Phosphono-butantricarbonsäure-1,2,4 kann eine Verflüssigung von sonst sehr dickflüssigen Pasten erreicht werden, wenn man die Konzentration der Eisenanteile in der Suspension steigern möchte. Durch den Zusatz von Phosphor-Verbindungen wird gleichzeitig eine Korrosionsinhibierung der Eisenteilchen in den magnetischen Aufzeichnungsmedien bewirkt.

Zur Energieeinsparung kann eine vorgeschaltete Konzentrierung der Feststoffe erfolgen. Der Stabilisierungszusatz, der in Mengen von 5 bis 15 Gew.-%, bezogen auf metallisches Eisen, zugegeben wird, zieht überwiegend bei der Behandlung auf die Oberflächen der Primärteilchen auf. Der nicht an der Teilchenoberfläche fixierte Anteil zieht überwiegend bei der Behandlung an die Agglomerat-Oberfläche und schützt damit das Material zusätzlich gegen Lufteinwirkung.

Eine weitere Stabilisierung kann ausserdem dadurch erzielt werden, dass man die erhaltenen kugelförmigen Agglomerate einer thermischen Behandlung bei Temperaturen zwischen 15 und 150°C in einer Gasatmosphäre unterzieht, deren Sauerstoffkonzentration 0,1 bis 21 Vol-% beträgt. Diese Behandlung lässt sich aufgrund der Abriebfestigkeit der Agglomerate sehr vorteilhaft im Fliessbett durchführen.

Das Verfahren zur Herstellung der erfindungsgemässen Agglomerate kann in Apparaten durchgeführt werden, die in der Industrie als Taumelmischer bekannt geworden ist. Auch Doppelkonusmischer können eingesetzt werden. Die Apparate müssen mit einem Heizmantel versehen sein und als Kontakttrockner betrieben werden können. Die Beheizung kann sowohl elektrisch, mit Dampf oder einem Wärmeträgeröl durchgeführt werden. Zum Schutz gegen unerwünschte Oxidation während des Eindampfprozesses ist die Beschleierung des Trockners mit einem Inertgas, beispielsweise Stickstoff, erforderlich.

Durch die taumelnde Bewegung in den genannten Apparaten wird eine höhere Schüttdichte der Agglomerate erreicht, die einerseits die Sauerstoffdiffusion in das Material erschwert, folglich zu besserer Stabilisierung führt, und andererseits den Transport in kleineren Gebinden zulässt. Trotz des erzielten höheren Schüttgewichtes treten keine Anbackungen auf, und die magnetischen Daten werden in keiner Weise negativ beeinflusst. Die erhaltenen Agglomerate zeichnen sich durch gute Dispergierbarkeit bei der Bandherstellung aus.

Die erfindungsgemässen kugelförmigen Agglomerate sindsomit hervorragend für dieHerstellung magnetischer Aufzeichnungsmedien geeignet.

Nachfolgend soll die Erfindung beispielhaft erläutert werden, ohne jedoch diese dadurch einzuschränken:

Beispiel

20 kg eines feinteiligen metallischen Eisens, wie es durch Reduktion von nadelförmigem Eisenoxid im Fliessbett mit Wasserstoff erhalten werden kann, wird in 77 l Wasser gegeben, in dem bereits 2,5 kg eines teilkondensierten 2-Ethyl-butyloxy-triethoxy-Silans und 60 g Ammoniumpolyphosphat enthalten sind. Diese Suspension wird in einer Dispergiermaschine in Inertgas-Atmosphäre (Stickstoff) unter Kühlen während etwa 15 Minuten homogen verteilt, bis eine Korngrösse der Feststoffpartikel von unter 100 μm erreicht ist.

50 kg dieser etwa 20 Gew.-% Feststoff enthaltenden Suspension, die sich noch gut pumpen lässt, gelangt nun in einen etwa 80 l fassenden Taumeltrockner, der dampfbeheizt ist. Unter Rotieren des Trockners erfolgt das Eindampfen der Suspension bei einer Manteltemperatur von etwa 100°C und einem Innendruck von ca. 50 mbar. Nach etwa 4 Stunden sind etwa 80 Gew.-% des Wassers verdampft. Hierauf erfolgt die Zugabe der zweiten Hälfte der feindispergierten Suspension. Die vollständige Eindampfung, die unter Stickstoffzuführung durchgeführt wird, ist nach weiteren 10 Stunden beendet.

Die Entleerung des Trockners erfolgt unter weiterer Zuführung von Inertgas nach 1-stündigem Kühlen mittels Kühlwasser, das anstelle des Wasserdampfes durch den Trocknermantel geleitet wird. Man erhält etwa 21,5 kg kugelförmig agglomeriertes Material, das zu 90 Gew.-% in der Korngrösse zwischen 1 und 6 mm anfällt. Die restlichen 10 Gew.-% an Grob- und Feinkorn werden wieder in den Prozess vor der Nassbehandlung zurückgeführt.

Dieses Granulat wird bei Raumtemperatur unter langsam ansteigendem Sauerstoffgehalt der Atmosphäre innerhalb von 6 Stunden an Luft gewöhnt und dann bei ansteigender Temperatur unter einem Gemisch von 50 Vol-% Luft und 50 Vol-% Stickstoff getempert, bis eine Wandtemperatur von 75°C erreicht ist. Durch diese Nachtemperung erhöht sich die Selbstentzündungstemperatur, gemessen in einer als Grewer-Ofen bezeichneten Apparatur, noch einmal um 20°C. (Lit. zu dem Grewer-Ofen: Druckschrift der Berufsgenossenschaft der chemischen Industrie zur Achema 79 «Mehr Sicherheit durch Prüfen» S. 37).

Das Schüttgewicht der Agglomerate betrug 0,95 kg/l.

Bei der üblicherweise in Lösungsmitteln erfolgenden Anreibung zur Herstellung von Magnetogrammträgern zerfallen die kugelförmigen Agglomerate bereits unter Einwirkung leichter Scherkräfte in ihre Primärteilchen.

Die BET-Oberfläche der Agglomerate betrug 20 m²/g.

In einem Magnetfeld von 280 kA/m weist das zerriebene Agglomerat folgende Magnetwerte auf.

| Koerzitivkraft | 92 [kA/m] |
| Verhältnis Remanenz/Magnetisierung | 0,60 |
| Sättigungsmagnetisierung | 155 $\dfrac{nTm^3}{g}$ |

**Patentansprüche**

1. Kugelförmige Agglomerate aus oberflächlich stabilisierten, im wesentlichen aus Eisen bestehenden Primärteilchen einer BET-Oberfläche von 5 bis 50 m²/g, gemessen am Agglomerat, in nicht-pyrophorer Form mit einem Schüttgewicht von 0,5 bis 2,0 kg/l, vorzugsweise 0,8 bis 1,5 kg/l, und einem Agglomerat-Durchmesser von 0,5 bis 10 mm, vorzugsweise 1 bis 5 mm.

2. Kugelförmige Agglomerate gemäss Anspruch 1, dadurch gekennzeichnet, dass die Primärteilchen einen Gehalt aus Polymeren und/oder Polymere bildenden Substanzen und/oder Hydrolysaten und/oder Kondensaten anorganischer und/oder organischer Verbindungen in Mengen von 0,2 bis 30 Gew.-%, vorzugsweise von 1 bis 20 Gew.-%, und besonders bevorzugt von 2–15 Gew.-% aufweisen.

3. Kugelförmige Agglomerate gemäss Anspruch 2, dadurch gekennzeichnet, dass die Primärteilchen zusätzlich einen oder mehrere Korrosionsinhibitoren enthalten.

4. Kugelförmige Agglomerate gemäss Anspruch 3, dadurch gekennzeichnet, dass die Korrosionsinhibitoren Verbindungen aus der Reihe der Benzotriazole, der Benzothiazole, der Benzimidazole, der Guanidine, der Amidine, der Phosphate, der Phosphonate und/oder der Metallsalze von Carbonsäuren sind und in einer Menge von 0,01 bis 5 Gew.-%, vorzugsweise von 0,1 bis 4 Gew.-% und besonders bevorzugt von 0,5 bis 3 Gew.-%, bezogen auf Metall, vorliegen.

5. Kugelförmige Agglomerate gemäss einem der Ansprüche 1 bis 4, erhältlich durch Reduktion von im wesentlichen aus Eisenoxid bestehenden Teilchen, anschliessender intensiver Dispergierung in flüssiger Phase, Beschichtung mit Polymere bildenden Substanzen und/oder Hydrolysaten und/oder Kondensaten anorganischer und/oder organischer Verbindungen, Verdampfen der flüchtigen Bestandteile und thermische Behandlung des entstandenen Granulates.

6. Verfahren zur Herstellung der kugelförmigen Agglomerate gemäss einem der Ansprüche 1 bis 5, dadurch gekennzeichnet, dass

a) im wesentlichen aus Eisenoxid bestehenden Teilchen in trockener Phase reduziert,
b) in flüssiger Phase intensiv dispergiert,
c) mit einer anorganischen und/oder organischen Beschichtung, die Korrosionsinhibitoren enthalten kann, versehen werden
d) von der flüssigen Phase durch Verdampfen der flüchtigen Bestandteile unter ständig rotierender und gleichzeitig taumelnder Bewegung abgetrennt werden,
e) und das entstandene Granulat einer thermischen Behandlung unterzogen wird.

7. Verfahren gemäss Anspruch 6, dadurch gekennzeichnet, dass dem Verdampfungsschritt eine Filtration vorausgeht.

8. Verfahren gemäss Anspruch 6, dadurch gekennzeichnet, dass der Verdampfungsvorgang unter Unterdruck erfolgt.

9. Verfahren gemäss einem der Ansprüche 6 bis 8, dadurch gekennzeichnet, dass die thermische Behandlung bei Temperaturen zwischen 15 und 150°C in einer Gasatmosphäre durchgeführt wird, deren Sauerstoffkonzentration 0,1 bis 21 Vol.-% beträgt.

10. Verwendung der kugelförmigen Agglomerate gemäss einem der Ansprüche 1 bis 5 zur Herstellung magnetischer Aufzeichnungsmedien.

**Revendications**

1. Agglomérats sphériques de particules primaires stabilisées en surface, consistant essentiellement en fer, d'une surface BET de 50 m²/g mésurée sur l'agglomérat, sous forme non pyrophorique, d'une densité apparente de 0,5 à 2 kg/l, de préférence de 0,8 à 1,5 kg/l, d'un diamètre d'agglomerat de 0,5 à 10 mm, de préférence de 1 à 5 mm.

2. Agglomérats sphériques selon la revendication 1, caractérisés en ce que les particules primaires contiennent des polymères et/ou substance formant des polymères et/ou des hydrolysats et/ou des condensats de composés inorganiques et/ou organiques en quantités de 0,2 à 30% en poids, de préférence de 1 à 20% en poids et en particulier de 2 à 15% en poids.

3. Agglomérats sphériques selon la revendication 2, caractérisés en ce que les particules primaires contiennent en outre un ou plusieurs inhibiteurs de corrosion.

4. Agglomérats sphériques selon la revendication 3, caractérisés en ce que les inhibiteurs de corrosion sont des composés de la série des benzotriazoles, des benzothiazoles, des benzimidazoles, des guanidines, des amidines, des phosphates, des phosphonates et/ou des sels métalliques d'acides carboxylique et sont présents en quantité de 0,01 à 5% en poids, de préférence de 0,1 à 4% en poids et en particulier de 0,5 à 3% en poids, rapportées au métal.

5. Agglomérats sphériques selon l'un des revendications 1 à 4, pouvant être obtenus par réduction de particules consistant essentiellement en oxyde de fer, suivie de dispersion énergique en phase liquide, revêtement avec des substances formant des polymères et/ou des hydrolysats et/ou des condensats de composés inorganiques et/ou organiques, évaporation des fractions volatiles et traitement thermique du granulat formé.

6. Procédé pour la fabrication d'agglomérats shériques selon l'une des revendications 1 à 5, caractérisé en ce que

a) on réduit en phase sèche des particules consistant essentiellement en oxyde de fer,
b) on les disperse énergiquement en phase liquide,
c) on les munit d'un revêtement inorganique et/ou organique qui peut contenir des inhibiteurs de corrosion,
d) on les sépare de la phase liquide par évaporation des constituants volatils avec un mouvement constant simultanément de rotation et chancelant,
e) on soumet le granulat qui se forme à un traitement thermique.

7. Procédé selon la revendication 6, caractérisé en ce que l'étape d'évaporation est précédée d'une filtration.

8. Procédé selon la revendication 6, caractérisé en ce que le processus d'évaporation a lieu sous pression réduite.

9. Procédé selon l'une des revendications 6 à 8, caractérisé en ce que le traitement thermique est mis en œuvre à des températures comprises entre 15 et 150°C dans une atmosphère gazeuse dont la concentration en oxygène est de 0,1 à 21% en volume.

10. Utilisation des agglomérats sphériques selon l'une des revendications 1 à 5 pour la fabrication de milieux magnétiques d'enregistrement.

Claims

1. Spherical agglomerates of surface-stabilized primary particles substantially consisting of iron, having a BET surface of from 5 to 50 $m^2/g$, measured on the agglomerate, in non-pyrophoric form and having an apparent weight of from 0.5 to 2.0 kg/l, preferably from 0.8 to 1.5 kg/l, and an agglomerate diameter of from 0.5 to 10 mm, preferably from 1 to 5 mm.

2. Spherical agglomerates according to claim 1, characterised in that the primary particles have a content of polymers and/or polymer-forming substances and/or hydrolysates and/or condensates of inorganic and/or organic compounds in quantities of from 0.2 to 30% by weight, preferably from 1 to 20% by weight and in particular from 2 to 15% by weight.

3. Spherical agglomerates according to claim 2, characterised in that the primary particles also contain one or more corrosion inhibitors.

4. Spherical agglomerates according to claim 3, characterised in that the corrosion inhibitors are compounds selected from benzotriazoles, benzothiazoles, benzimidazoles, guanidines, amidines, phosphates, phosphonates and/or the metal salts of carboxylic acids and they are present in a quantity of from 0.01 to 5% by weight, preferably from 0.1 to 4% by weight and in particular from 0.5 to 3% by weight, based on the metal.

5. Spherical agglomerates according to one of claims 1 to 4, which may be obtained by reducing particles substantially consisting of iron oxide, subsequent intensive dispersion in the liquid phase, coating with polymer-forming substances and/or hydrolysates and/or condensates of inorganic and/or organic compounds, evaporating the volatile components and thermal treatment of the resulting granulates.

6. A process for the production of the spherical agglomerates according to one of claims 1 to 5, characterised in that:

a) particles substantially consisting of iron oxide are reduced in the dry phase,
b) are intensively dispersed in the liquid phase,
c) are provided with an inorganic and/or organic coating which may contain corrosion inhibitors,
d) and are separated from the liquid phase by evaporating the volatile components with a continuously rotating and simultaneously tumbling movement, and
e) the resulting granulates are subjected to a thermal treatment.

7. A process according to claim 6, characterised in that filtration precedes the evaporation step.

8. A process according to claim 6, characterised in that the evaporation if effected under reduced pressure.

9. A process according to one of claims 6 to 8, characterised in that the thermal treatment is carried out at a temperature of from 15 to 150°C in a gas atmosphere, the oxygen concentration of which is from 0.1 to 21% by volume.

10. The use of the spherical agglomerates according to one of claims 1 to 5 for the production of magnetic recording media.